# EUROPEAN PATENT SPECIFICATION

(11) **EP 0 924 224 B1**
(45) Date of publication and mention of the grant of the patent: **07.08.2002**
(21) Application number: 98310571.9
(22) Date of filing: 22.12.1998
(51) Int. Cl.: C08F 8/08

(54) **Process for producing epoxidized block copolymer**
Verfahren zur Herstellung von epoxidierten Blockcopolymeren
Procédé de préparation de copolymères séquencés époxydés

(30) Priority: 22.12.1997 JP 36554297
(43) Date of publication of application: 23.06.1999
(73) Proprietor: DAICEL CHEMICAL INDUSTRIES, Ltd., Sakai-shi, Osaka 590-0905 (JP)
(72) Inventor: Takagi, Motomi, Himeji-shi, Hyougo 670-0803 (JP); Tobo, Kazuhisa, Himeji-shi, Hyougo 671-1262 (JP)
(74) Representative: Cresswell, Thomas Anthony

(56) References cited:
- EP-A- 0 564 050
- EP-A- 0 779 303
- EP-A- 0 810 237
- DATABASE WPI Section Ch, Week 9629 Derwent Publications Ltd., London, GB; Class A12, AN 96-283529 XP002098405 & JP 08 120022 A (DAICEL CHEM IND LTD) , 14 May 1996
- DATABASE WPI Section Ch, Week 9720 Derwent Publications Ltd., London, GB; Class A12, AN 97-221803 XP002098406 & JP 09 067409 A (DAICEL CHEM IND LTD) , 11 March 1997

## Description

### TECHNICAL FIELD

This invention relates to a process for the production of an epoxidized block copolymer having an absolutely low content of an organic solvent residue, which process permits efficient removal of an organic solvent from an epoxidation reaction liquid with use of two separate stages of operation. The epoxidized block copolymer derivable by the process of the invention is moldable as it is into molded articles, and moreover, is suitable as a modifier or an auxiliary modifier for use in rubber-like polymers or resinous polymers, an adhesive, a sealant or a modifying agent for use in asphalt.

### BACKGROUND ART

A block copolymer composed of a vinyl aromatic hydrocarbon compound and a conjugated diene compound has been widely used in those industrial sectors related to modifiers and adhesives. This is due to the fact that such block copolymer is transparent and elastic at normal temperature, even in unvulcanized condition, to such an extent as to be favorably comparable to natural rubber vulcanized or synthetic rubber vulcanized, and what is more, is moldable at high temperature in competition with thermoplastic resins. To further improve those physical properties, an epoxidized block copolymer has been proposed in which the carbon-carbon double bonds induced from a diene block in a block copolymer have been epoxidized. Such epoxidized block copolymer is produced firstly by epoxidizing a block copolymer in an organic solvent, and subsequently by recovering from the resultant reaction liquid an epoxidized block copolymer contained in homogeneously dissolved form or in slurry form in that solvent.

EP-A-0 779 303 discloses an epoxidized block copolymer obtained by epoxidizing a block copolymer comprising a polymer block composed mainly of a vinyl aromatic hydrocarbon compound and a polymer block composed mainly of a conjugated diene compound.

As a method of recovering an epoxidized block copolymer from an epoxidation reaction liquid, steam stripping is well known in which a reaction liquid, i.e., an epoxidized block copolymer-containing solution or slurry in an organic solvent, is poured into boiling water to distil the organic solvent along with hot steam, whereby an epoxidized block copolymer is deposited in the form of a crumb, as disclosed for example in Japanese Examined Patent Publications No. 55-7457, No. 55-22489 and No. 58-10411. The epoxidized block copolymer thus formed is usually made free of moisture in a dewatering-drying step.

Additionally, Japanese Unexamined Patent Publication No. 59-53504 discloses that a crumb product obtained by steam stripping can be incorporated with a metallic oxide or a metallic carbonate and then dried with a drying apparatus. Japanese Unexamined Patent Publication No. 61-218614 teaches that a steam-stripped crumb product can be treated with a dewatering apparatus to have a low moisture content, followed by further removal of moisture by means of a biaxial vented extruder.

The steam stripping method, however, needs numerous steps such as of depositing a crumb, separating a solid and a liquid from each other, and dewatering-drying the crumb, thus inviting tedious operations. Particularly in the case of failure to choose an appropriate surfactant, a crumb having deposited sometimes adheres in a large quantity to a steam-stripping tank on its inner wall or its stirring blades during steam stripping, eventually making the system inoperative. In addition, when in moisture removal with a dewatering apparatus, a deposited crumb often fails to bite into the screw of that apparatus, though this depends on the shape of the crumb. Besides and uneconomically, a large amount of steam is necessary for removal of an organic solvent.

To cope with the problems experienced by the steam stripping method, there is known a method in which from an epoxidized block copolymer-containing organic liquid, an organic solvent used is removed directly by use of an evaporator so that the epoxidized block copolymer is recovered. The method noted here is found in Japanese Unexamined Patent Publication No. 2-187404 and Japanese Examined Patent Publications No. 5-38762 and No. 7-681. Direct removal of an organic solvent from an epoxidation reaction liquid is superior to the steam stripping method in respect of increased economy and minimized process step, but is liable to bring about finally an epoxidized block copolymer having impaired heat stability. Furthermore, gels in particular tend to take place during treatment with consequent formation of an epoxidized block copolymer with poor color shade.

In Japanese Unexamined Patent Publication No. 9-169814, a method of the production of an epoxidized block copolymer is disclosed in which a first-stage evaporator and a second-stage kneading type evaporator are employed. This publication illustrates a multiple tube type evaporator, a liquid film type evaporator, a centrifugal thin film type evaporator and a plate type evaporator as the first-stage evaporator, and a biaxial surface-renewing self-cleaning type evaporator and a biaxial vented extruder as the second-stage kneading type evaporator.

In the case where any one of the above stated evaporators is employed as the first-stage evaporator, however, a reaction liquid to be treated at the first stage can migrate only by gravity on the surface of evaporation defined in that apparatus. Such liquid treatment has the problem that it creates difficulty in setting the content of gels in the resulting product to be at a desirable low level, especially in setting the content of 0.074 mm of sieve opening-on (200 mesh-on) gels in tetrahydrofuran insolubles to be 100 ppm or below.

### SUMMARY OF THE INVENTION

The present invention has for its object to produce an epoxidized block copolymer that is less susceptible to heat deterioration and has less contents of an organic solvent residue and gels, especially not more than 100 ppm of 0.074 mm of sieve opening-on (200 mesh-on) gels in tetrahydrofuran insolubles.

In order to solve the foregoing problems, the present inventors have conducted researches on various methods of producing epoxidized block copolymers. It has now been found that these problems can be alleviated by means of a so-called two-stage mode of solvent removal in which an epoxidation reaction liquid is concentrated with use of a stirring film type evaporator, followed by removal of the corresponding organic solvent with use of a biaxial vented extruder. The invention bases its completion on the above finding.

More specifically, the invention provides a process for the production of an epoxidized block copolymer, which comprises: preparing an epoxidation reaction liquid by epoxidizing a block copolymer (C) or its hydrogenated product (D) in a concentration of 5 - 50% by weight in an organic solvent, said block copolymer comprising a polymeric block (A) composed predominantly of a vinyl aromatic hydrocarbon compound and a polymeric block (B) composed predominantly of a conjugated diene compound; concentrating said epoxidation reaction liquid by supplying the same to a stirring film type evaporator, having a concentrate discharge outlet that can forcibly discharge the concentrated liquid, so as to evaporate the organic solvent from the same; and subsequently by removing the remaining organic solvent from the resultant concentrated liquid by means of a biaxial vented extruder, thereby recovering an epoxidized block copolymer (E) having been prepared in the epoxidation reaction liquid.

The epoxidized block copolymer (E) may have an epoxy equivalent weight of 140 - 15,000, particularly 200 - 12,000.

The stirring film type evaporator may be operable at a temperature of 80 - 300 °C and at an internal pressure of 101.1 KPa (760 mm Hg) or lower.

The stirring film type evaporator may be operable with a residence time of 20 minutes or shorter.

The biaxial vented extruder may be operable at a temperature of 80 - 300°C and at an internal pressure of 66.5 kPa (500 mm Hg) or lower.

The biaxial vented extruder may be operable with a residence time of 15 minutes or shorter.

The epoxidized block copolymer may have a content of 1,000 ppm or below in terms of an organic solvent residue.

The epoxidized block copolymer may have a content of 100 ppm or below in terms of 0.074 mm of sieve opening-on (200 mesh-on) gels in tetrahydrofuran insolubles.

As a result of the above-mentioned two-stage mode of solvent removal, the organic solvent used and the epoxidized block copolymer generated are separable from each other without prolonged heat hysteresis. Thus, copolymer is obtainable with a low level of heat deterioration, a low content of organic solvent residue and a content of 100 ppm or below in terms of 0.074 mm of sieve opening-on (200 mesh-on gels).

### BRIEF DESCRIPTION OF THE DRAWING

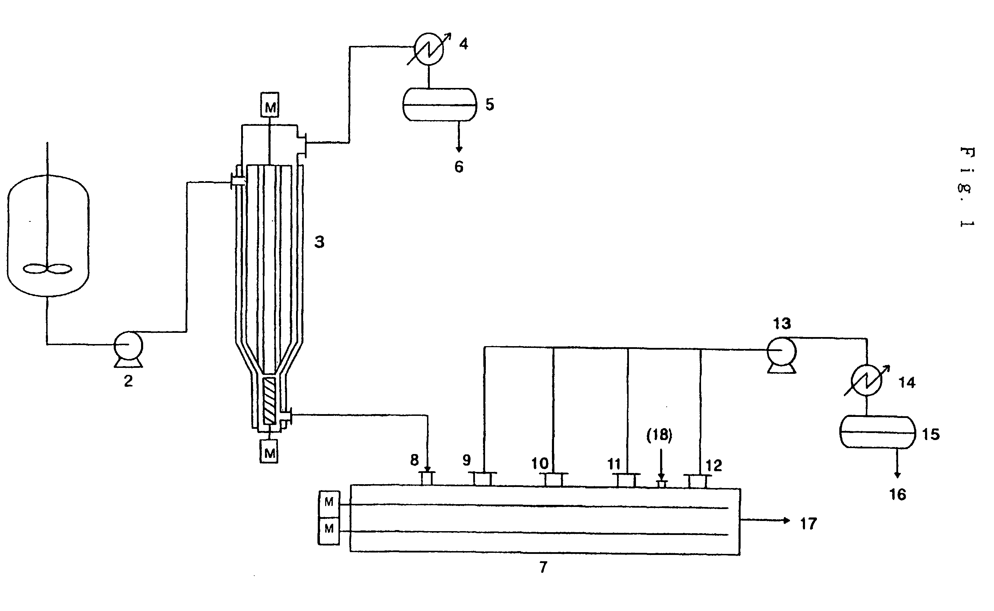

Fig. 1 illustrates a flow diagram of the entire production line according to the present invention.

### DETAILED DESCRIPTION

By the block copolymer (C) used in the present invention is meant such derived by copolymerizing a polymeric block (A) composed chiefly of a vinyl aromatic hydrocarbon compound and a polymeric block (B) composed chiefly of a conjugated diene compound. The hydrogenated product (D) of the above block copolymer denotes such derivable by partially hydrogenating the carbon-carbon double bonds present in the polymeric block (B) of the block copolymer (C). Moreover, the epoxidized block copolymer (E) used herein is such obtained by epoxidizing the carbon-carbon double bonds contained in the polymeric block (B) of the block copolymer (C) or its hydrogenated product (D).

Suitable vinyl aromatic hydrocarbon compounds for use in forming the block copolymer (C) are chosen from styrene and alkyl-substituted styrenes such as α-methylstyrene, alkoxy-substituted styrenes, vinyl naphthalene, alkyl-substituted vinyl naphthalenes, divinyl benzene and vinyl toluene, among which styrene is particularly preferred. These compounds may be used singly or in combination with two or more.

Suitable conjugated diene compounds for use in forming the block copolymer (C) are chosen from 1,3-butadiene, isoprene, 1,3-pentadiene, 2,3-dimethyl-1,3-butadiene, 3-butyl-1,3-octadiene and phenyl-1,3-butadiene. Of these compounds, 1,3-butadiene and isoprene are particularly desirable as they are less costly and easily available. The listed compounds may be used alone or may be combined with two or more.

To form the block copolymer (C) from the vinyl aromatic hydrocarbon compound and the conjugated diene compound, the copolymeric composition ratio {vinyl aromatic hydrocarbon compound/conjugated diene compound (ratio by weight)} is preferably in the range of 5/95 - 80/20, more preferably of 10/90 - 70/30. The number-average molecular weight of the block copolymer (C) eligible for the present invention is preferably in the range of 5,000 - 500,000, more preferably of 10,000 - 100,000. Lower molecular weights than the above range are ineffective in gaining rubber-like elasticity, whereas higher molecular weights make the resultant epoxidized block copolymer less likely to melt. The number-average molecular weight noted here is such reduced from the standard polystyrene as determined by the GPC method.

The structure of the block copolymer (C) is not particularly restricted. For example, a block copolymer such as A-B-A, B-A-B-A or A-B-A-B-A which is composed of a vinyl aromatic hydrocarbon compound and a conjugated diene compound may be accepted. The molecular structure itself may be of a straight, branched or radial structure, or of an optional combination of these structures. In the block copolymer, the vinyl aromatic hydrocarbon compound may be distributed in uniform form or in tapered form. Furthermore, the copolymerized portion may contain a plurality of vinyl aromatic hydrocarbon compound parts distributed in uniform form and/or in tapered form.

No particular restriction is imposed on the method of preparing the hydrogenated product (D) of the block copolymer; that is, any known method may be employed. For instance, there may be used a method in which the block copolymer is hydrogenated in an inert solvent and in the presence of a hydrogenating catalyst as disclosed in Japanese Examined Patent Publications No. 42-8704 and No. 43-6636. Though the amount of hydrogenation is not particularly restrictive, it is necessary that those unsaturated carbon bonds capable of reacting with an epoxidizing agent be still present in the molecule of the hydrogenated product (D) such that subsequent epoxidation is possible.

Epoxidation is conducted by addition of an epoxidizing agent to the block copolymer (C) or its hydrogenated product (D) dissolved in advance in a suitable organic solvent. The concentration of the block copolymer in the organic solvent is preferably in the range of 5 - 50% by weight. The sites to be epoxidized with the epoxidizing agent are those carbon-carbon double bonds attached to the polymeric block (B). Here, the dissolution of the block copolymer (C) in the organic solvent includes the case where the block copolymer (C) exists in slurry form in that solvent.

Suitable organic solvents for use in epoxidation include straight- and branched-chain hydrocarbons such as pentane, hexane, heptane and octane and alkyl-substituted derivatives thereof; alicyclic hydrocarbons such as cyclopentane, cyclohexane and cycloheptane and alkyl-substituted derivatives thereof; aromatic and alkyl-substituted aromatic hydrocarbons such as benzene, naphthalene, toluene and xylene; aliphatic carboxylic acid esters such as methyl acetate, ethyl acetate and propyl acetate; and halogenated hydrocarbons such as chloroform. Among these solvents, cyclohexane, ethyl acetate, chloroform, toluene, xylene and hexane are desirable since they are highly capable of dissolving the block copolymer (C) or its hydrogenated product (D), low in boiling point and easy to recover.

Suitable epoxidizing agents for use in the epoxidation reaction include organic peroxides such as peracetic acid, perbenzoic acid, performic acid and pertrifluoroacetic acid, hydrogen peroxide, and combinations of hydrogen peroxide with low-molecular fatty acids. Of these epoxidizing agents, peracetic acid is preferred as it has been mass-produced on a commercial scale and hence is made available at low cost, and further is featured by its relatively high stability. A catalyst may be used, where desired, in performing the epoxidation reaction.

The amount of the epoxidizing agent to be used is not particularly restricted; however, an appropriate amount of such agent can be decided at will with due attention drawn to the reactivity of an epoxidizing agent to be employed, the degree of epoxidation to be attained and the number of carbon-carbon double bonds attached to the block copolymer (C) or its hydrogenated product (D) to be used. The epoxy equivalent weight of the finally obtained product (E) is preferably in the range of 140 - 15,000, more preferably of 200 - 12,000. The epoxy equivalent weight if less than 140 makes the resultant copolymer less elastic and if more than 15,000 fails to produce unique physical properties that can inherently accrue from epoxidation. The epoxy equivalent weight is computed from the equation, epoxy equivalent weight = 1,600/{oxirane oxygen content (wt%) in epoxidized block copolymer}, and is taken to denote the weight of the epoxidized block copolymer per 1 mol of oxirane oxygen. The oxirane oxygen content is determined by titration with a hydrogen bromide solution in acetic acid. The larger the epoxy equivalent weight is, the oxirane oxygen content is lower. Conversely, the smaller the epoxy equivalent weight is, the oxirane oxygen content is higher. The epoxy equivalent weight may be optionally selected by adjusting the amount of an epoxidizing agent to be used.

No particular restriction is placed on the epoxidation reaction temperature which is variable with the kind and amount of an epoxidizing agent to be used, of an organic solvent to be used and of a block copolymer (C) or its hydrogenated product (D) to be used. For example, in the case of use of peracetic acid as an epoxidizing agent, the reaction temperature is preferably in the range of 0 - 70°C. Lower temperatures than 0°C are responsible for reduced rate of reaction, while higher temperatures than 70°C make the generated epoxy groups prone to ring opening, or cause peracetic acid to become decomposed soon. To attain improved stability of peracetic acid, epoxidation can be effected with phosphoric acid salts added to the reaction system. The epoxidation reaction time is preferably in the range of 0.1 - 72 hours, more preferably of 0.2 - 10 hours from the point of view of productivity. Upon completion of the epoxidation reaction, it is desired that those acids having been generated during reaction be neutralized with an alkaline solution, or the epoxidation reaction liquid be washed with water. The washing with water may be done continuously or batchwise. The acid value of the epoxidized block copolymer after being washed with water is set to be preferably not more than 1 mg KOH/g, more preferably below 0.5 mg KOH/g, so that the content of gels can be decreased in the finally obtained epoxidized block copolymer.

The entire production line of the present invention is shown as a flow diagram in Fig. 1. In this figure, various reference numerals denote the following members and materials.
- 1: reaction vessel or intermediate tank
- 2: pump
- 3: stirring film type evaporator
- 4, 14: condenser
- 5, 15: recovered solvent tank
- 6, 16: recovered solvent
- 7: biaxial vented extruder
- 8: concentrated liquid
- 9: first vent
- 10: second vent
- 11: third vent
- 12: fourth vent
- 13: vacuum pump
- 17: solvent-free resin
- 18: water supply port

According to the present invention, the epoxidized block copolymer-containing epoxidation reaction liquid thus prepared is subjected to first-stage evaporation where the organic solvent used is removed by means of a stirring film type evaporator, followed by subjecting the resultant reaction liquid to second-stage solvent removal where the remaining volatile components are removed by means of a biaxial vented extruder. As the stirring film type evaporator, an evaporator in common use may be useful so long as it is capable of scraping, with use of a rotary scraper plate, a liquid film movable downwardly of the heat transfer surface and hence of facilitating heat transfer and also of ensuring uniform evaporation. The evaporator is so constructed as to have a concentrate discharge outlet through which a concentrated reaction liquid is forcibly discharged. The evaporator of this construction can transport a highly viscous material having passed through a region in which a material drops spontaneously by gravity, consequently reducing residence of the copolymer in the apparatus and minimizing quality deterioration such as gel formation.

The working temperature, internal pressure and stirrer revolution to be set for the stirring film type evaporator can be decided with reliance upon the capacity of the apparatus itself, the physical properties (viscosity, heat stability, etc.) of a copolymer to be formed, the kind and concentration of an organic solvent to be used and the quality of a final product to be produced. The temperature inside the stirring film type evaporator is preferably in the range of 80 - 300°C, more preferably of 100 - 250°C. Lower than 80°C fails to fully remove the organic solvent, while higher than 300°C invites increased gel in the resulting copolymer. The internal pressure in the evaporator is preferably 101.1 KPa (760 mm Hg) or below, more preferably in the range of 53.2-0.133 KPa (400 - 1 mm Hg). By the internal pressure in the evaporator is meant a pressure that reads lowest at a gaseous portion situated in contact with the copolymer in the evaporator. Higher internal pressures than 101.1 KPa (760 mm Hg) are ineffective for full removal of the organic solvent. It is desired that the number of revolution of the stirring blade for use in the stirring film type evaporation be set to be in the range of 100 - 5,000 sec⁻¹.

The residence time of the copolymer in the stirring film type evaporator is preferably in the range of 20 - 3 minutes, more preferably of 10 - 5 minutes, which is variable with the quality of the resulting product.

The biaxial vented extruder is provided with at least one deaerating vent, preferably 1 - 10 vents, more preferably 1 - 5 vents. A rear vent may be disposed where needed. This construction of biaxial vented extruder may be generally of L/D = 2 - 50, preferably 4 - 45 (L is the length of a screw, and D is the outward diameter of a screw). The screw may be "mating" or "non-mating" in structure and can be rotatory unidirectionally or reversely. A biaxial self-cleaning evaporator or a continuous kneader may in some instances be generally employed in place of a biaxial vented extruder. However, such evaporator or kneader requires for a resin to be retained therein for a longer period of time than does the biaxial vented extruder, and hence, does not suit for use in the epoxidized block copolymer intended to be produced by the present invention. This prolonged residence causes the epoxidized block copolymer to suffer from deterioration of copolymer qualities such as gel formation.

The heating conditions of barrels, internal pressure of an extruder and revolution number of a screw, all of them being associated with the biaxial vented extruder, can be suitably selected with particular regard paid to the capacity of the extruder itself, the properties (viscosity, heat stability, etc.) of a copolymer to be used, the kind and concentration of an organic solvent to be used and the quality of a product to be attained and also with a proper balance kept with the deaerating capability of the stirring film type evaporator. The temperature inside the extruder is preferably in the range of 80 - 300°C, more preferably of 100 - 250°C. Extruder barrels may be set to have their respective varying temperatures. Lower extruder temperatures than 80°C fail to fully remove the organic solvent, whereas higher extruder temperatures than 300°C invite many a gel in the product. The internal pressure in the extruder is preferably in the range of not higher than 66.5 KPa (500 mm Hg), more preferably in the range of 53.2-0.133 KPa (400 - 1 mm Hg). Here, the internal pressure in the extruder is taken to mean a pressure that is read on a pressure gauge usually fixed to a vented portion. If the internal pressure is above 66.5 KPa (500 mm Hg), the organic solvent is not sufficiently removable. Desirably, the number of revolution of the screw is so set as to provide a rate of shear of 100 - 2,100 sec⁻¹. Additionally, the organic solvent residue in the product, namely in the epoxidized block copolymer, may be made low by adding water in a limited amount at from a suitably selected portion of the extruder.

The residence time in the biaxial vented extruder, though variable with a product to be obtained, is set to be not longer than 15 minutes, preferably below 10 minutes, more preferably below 5 minutes, especially preferably not longer than 3 minutes.

As stated hereinbefore, the present invention is designed to remove an organic solvent by the use of two separate stages of operation. This enables solvent removal with shortened residence time, giving a product without involving prolonged heat hysteresis. with use of the stirring film type evaporator, the concentration of an organic solvent contained in an epoxidized block copolymer liquid can be decreased to a range of 5 - 70% by weight, preferably of 20 - 40% by weight, so that the biaxial vented extruder can be installed on a small scale as a second-stage evaporator. The content of an organic solvent residue in the epoxidized block copolymer thus produced is preferably not more than 5,000 ppm (ppm being taken to mean weight/weight ppm in the invention), more preferably not more than 2,000 ppm, especially preferably not more than 1,000 ppm. If the content of an organic solvent residue exceeds 5,000 ppm, the resulting product invites foaming while in molding, sometimes emitting malodour. The content of an organic solvent residue can be adjusted by varying the temperature of the extruder to be used, the internal pressure of the extruder to be used and the speed of treatment to be followed.

In the present invention, an organic solvent is removed at two separate stages of operation under the above specified conditions. Consequently, the finished product (epoxidized block copolymer) is obtainable with a content of gels of not more than 0.1% by weight, especially with a low content of 200 mesh-on gels in tetrahydrofuran insolubles in the product, that is, of not more than 100 ppm (ppm being by weight/weight ppm), preferably of 50 ppm or below.

If the content of 0.074 mm of sieve opening-on (200 mesh-on) gels in tetrahydrofuran insolubles in the product is more than 100 ppm, then a large number of fish eyes occur in the product which eventually becomes unsuited for molding.

In the process according to the present invention, various additives may be incorporated in any selected process steps before an epoxidized block copolymer product is finally obtained. They include for example heat stabilizers, anti-aging agents, crosslinking agents, ultraviolet absorbers, inorganic fillers such as silica, talc and carbon, plasticizers and softeners such as oils.

The epoxidized block copolymer derived by the present invention can be formed into either one of stranded, pelleted, foamed crumbled, granulated and powdered shapes, among which a pelleted shape is preferred. The pelleted shape and other shapes can be molded into sheets, films, injection-molded articles and blow-molded articles which are used as starting materials for household appliances, automotive parts, industrial parts, household goods and toys. In addition, such epoxidized block copolymer is suitably useful as a modifier for a variety of thermoplastic resins, a starting material for takifiers and adhesives and a modifying agent for asphalt.

### EXAMPLES

The present invention is further described by way of several examples which follow. However, the invention should not in any way be construed as being limited to these examples. All "%" and "ppm" signs are based on "by weight" unless otherwise noted.

The content of gels is the weight percent of insolubles in tetrahydrofuran (THF). In particular, the weight content of gels in THF insolubles that have not been allowed to pass through a 0.074 mm sieve opening (200-mesh) wire screen is called the content of 0.074 mm of sieve opening-on (200 mesh-on) gels and indicated by the unit sign of ppm. The content of gels is measured by placing about 0.1 g of precisely weighed pellets in 10 ml of THF and thereafter by dissolving the pellets in the solvent with stirring for 2 - 3 hours at 25°C, followed by computation from the weight of the resultant insolubles dried.

### (Example 1)

In 1,500 parts by weight of ethyl acetate was completely dissolved 300 parts by weight of a polystyrene-polybutadiene-polystyrene block copolymer (TR-2000, product of Japan Synthetic Rubber Co., styrene/butadiene weight ratio=40/60). The solution so prepared was incorporated continuously dropwise with 169 parts by weight of a 30% peracetic acid-containing ethyl acetate solution, and epoxidation was conducted while being stirred at 40°C for 3 hours. The reaction liquid was then cooled to normal temperature and washed with pure water, whereby there was obtained an ethyl acetate solution containing an epoxidized polystyrene-polybutadiene-polystyrene copolymer (ESBS). The content of volatiles in the resultant epoxidized block copolymer liquid was 70% by weight (the concentration of the epoxidized block copolymer being 30% by weight). The acid value of that liquid was 1.0 mg KOH/g.

The above liquid was supplied to a stirring film type evaporator (EXEVA, trademark, product of Shinko Pantec Co., LTD.) having a liquid transport screw located in close proximity to a concentrate discharge outlet and having a heat transfer area of 0.5 m². The stirring film type evaporator was operated with a temperature of 150°C at which to supply a heat transfer medium, an internal pressure of 53.2 KPa (400 mm Hg) in an evaporation system and a revolution number of 300 rpm at which to rotate a stirring blade (equivalent to a rate of shear of 1,580 sec⁻¹). In consequence of this operation, the content of volatiles in the epoxidized block copolymer liquid was concentrated to 25% by weight (the concentration of the epoxidized block copolymer being 75% by weight).

Subsequently, the resulting concentrate was supplied to a biaxial vented extruder provided with a screw of 44 mm in outward diameter, L/D = 42 and 4 vents, but with rear vents omitted. This extruder was operated with a temperature of 150°C at which to supply a heat transfer medium, an internal pressure of 13.3 KPa (100 mm Hg) in an extruder system and a revolution number of 100 rpm at which to rotate a screw (equivalent to a shear rate of 600 sec⁻¹). Moreover, an epoxidized block copolymer-containing ethyl acetate solution was put into the stirring film type evaporator in such a manner that the copolymer to be obtained from the biaxial vented extruder was set to be at a production rate of 15 kg/h. The whole production line is shown as a flow diagram in Fig. 1.

Next, the copolymer discharged out of a tip of the extruder was cut with a cutter into pelleted form. The content of an organic solvent residue in the copolymer having been subjected to solvent removal was 2,300 ppm, and the epoxy equivalent weight of the copolymer was 520. No foaming was found at all in the molded pellet. Examination of foaming was made by pressing the copolymer at 200°C to thereby form a sheet of 2 mm in thickness and by inspecting the sheet visually. In addition, upon completion of the operation, the screw was pulled off the extruder and checked in its interior with the naked eye with the result that gel deposition was found totally free. The content of gels was not more than 0.1% by weight, and the content of 0.074 mm of sieve opening-on (200 mesh-on) gels was not more than 100 ppm.

### (Example 2)

The procedure of Example 1 was repeated except that the reaction liquid after being epoxidized was washed more carefully with water, and the acid value of the epoxidized block copolymer liquid was set to be at 0.5 mg KOH/g. As a consequence of solvent removal of the resulting copolymer, the content of an organic solvent residue in that copolymer was 2,400 ppm, the content of gels was not more than 0.1% by weight, and the content of 0.074 mm of sieve opening-on (200 mesh-on) gels was not more than 50 ppm.

### (Example 3)

The procedure of Example 1 was repeated except that the acid value of the liquid was 0.5 mg KOH/g, when the biaxial vented extruder was operated, water was supplied in an amount of 0.2 kg/h from a water supply port situated in front of a fourth vent, and the revolution number of the screw was changed to 70 rpm (equivalent to a shear rate of 420 sec⁻¹). Thus, an epoxidized block copolymer was produced. In the resulting copolymer, the content of an organic solvent residue was 760 ppm, the epoxy equivalent weight was 520. Foaming was not found at all in the molded article. After the operation was completed, the screw was, pulled off the extruder and inspected in its interior by naked eye. Gel deposition was found nil. The content of gels was less than 0.1% by weight, and the content of 0.074 mm of sieve opening-on (200 mesh-on) gels was not more than 50 ppm.

### (Comparative Example 1)

An epoxidized block copolymer-containing ethyl acetate solution (its concentration of volatiles being 70% by weight), prepared in the same manner as in Example 1, was supplied at a speed of 66 kg/h to a stirring film type evaporator having no liquid transport screw disposed directly adjacent to a concentrate discharge outlet, but has having a heat transfer area of 0.5 m². The stirring film type evaporator was operated with a temperature of 150°C at which to supply a heat transfer medium, an internal pressure of 53.2 KPa (400 mm Hg) in an evaporation system and a revolution number of 300 rpm at which to rotate a stirring blade (equivalent to a shear rate of 1,580 sec⁻¹). The resultant concentrate became retained just in front of a concentrate discharge outlet of the evaporator with eventual failure to discharge the concentrate out of the evaporator and to continue the operation. The content of gels was 3.0% by weight, and the content of 0.074 mm of sieve opening-on (200 mesh-on) gels was 500 ppm.

### (Comparative Example 2)

The procedure of Example 1 was repeated except that a biaxial self-cleaning evaporator of a lateral type with a screw outward diameter of 100 mm and L/D = 6 was substituted for the biaxial vented extruder and operated with a temperature of 160°C at which to supply a heat transfer medium, an internal pressure of 13.3 KPa (100 mm Hg) in an evaporation system and a revolution number of 30 rpm at which to rotate a screw (equivalent to a shear rate of 75 sec⁻¹). Thus, an epoxidized block polymer was produced. The content of an organic solvent residue in the resultant copolymer was 1,150 ppm, and the epoxy equivalent weight of the copolymer was 520. The molded article brought about no foaming, but led to numerous fish eyes that resulted in unacceptable molding. Upon completion of the operation, the screw was pulled off the evaporator and opened in its interior for visual inspection. A resin discolored yellowish was found to have adhered to the inner wall of the evaporator and also to the screw. The content of gels was 3.0% by weight, and the content of 0.074 mm of sieve opening-on (200 mesh-on) gels was 500 ppm.

### (Comparative Example 3)

In 1,500 parts by weight of ethyl acetate was dissolved 300 parts by weight of a polystyrene-polybutadiene-polystyrene block copolymer (SBS, TR-2000, product of Japan Synthetic Rubber Co.). The solution so prepared was incorporated with 169 parts by weight of a 30% peracetic acid-containing ethyl acetate solution, and epoxidation was conducted while being stirred at 4°C for 3 hours. The reaction liquid was then cooled to normal temperature and washed with pure water, whereby there was obtained an ethyl acetate solution containing an epoxidized polystyrene-polybutadiene-polystyrene copolymer (ESBS). The concentration of the epoxidized block copolymer was 20% by weight.

The above ethyl acetate solution was charged at a speed of 60 - 80 kg/hr (ESBS: 18.0 - 22.5 kg/hr) and with use of a gear pump into a multiple tube type heat exchanger (hereinafter called "shell and tube") of 7.80 m² in heat transfer area. The shell and tube was set to have a heat transfer medium supply temperature of 160°C and an internal pressure of 61.2 KPa (460 mm Hg). The content of volatiles in the resultant epoxidized block copolymer was concentrated to 20% by weight (the concentration of the epoxidized block copolymer being 80% by weight).

The above concentrate was charged at a speed of 20 - 25 kg/hr (ESBS: 18 - 22.5 kg/hr) into a biaxial vented evaporator (heat transfer area 1 m², L/D = 9). This evaporator was set to have a heat transfer medium supply temperature of 150 - 160°C and an internal pressure of 26.6 KPa (200 mm Hg).

The content of volatiles in the epoxidized block copolymer proved to be 0.04% by weight (the concentration of the epoxidized block copolymer being 99.6% by weight).

The content of gels in the epoxidized block copolymer was 0.2% by weight, and the content of 0.074 mm of sieve opening-on (200 mesh-on) gels was 230 ppm.

## Claims

1. A process for the production of an epoxidized block copolymer, which comprises: preparing an epoxidation reaction liquid by epoxidizing a block copolymer (C) or its hydrogenated product (D) in a concentration of 5-50% by weight in an organic solvent, said block copolymer comprising a polymeric block (A) composed predominantly of a vinyl aromatic hydrocarbon compound and a polymeric block (B) composed predominantly of a conjugated diene compound; concentrating said epoxidation reaction liquid by supplying the same to a stirring film type evaporator, having a concentrate discharge outlet that can forcibly discharge the concentrated liquid, so as to evaporate the organic solvent from the same; and subsequently removing the remaining organic solvent from the resultant concentrated liquid by means of a biaxial vented extruder, thereby recovering an epoxidized block copolymer (E) having been prepared in the epoxidation reaction liquid.

2. A process according to claim 1, in which said epoxidized block copolymer (E) has an epoxy equivalent weight of 140-15,000.

3. A process according to claim 2, in which said epoxidized block copolymer (E) has an epoxy equivalent weight of 200-12,000.

4. A process according to claim 1, 2 or 3, in which said stirring film type evaporator is operable at a temperature of 80-300°C and at an internal pressure of 101.1 KPa (760 mm Hg) or lower.

5. A process according to any of claims 1 to 4, in which said stirring film type evaporator is operable with a residence time of 20 minutes or shorter.

6. A process according to claim 1, in which the biaxial vented extruder is operable at a temperature of 80-300°C and at an internal pressure of 66.5 KPa (500 mm Hg) or lower.

7. A process according to any preceding claim in which the biaxial vented extruder is operable with a residence time of 15 minutes or shorter.

8. A process according to any preceding claim, in which said epoxidized block copolymer contains 1,000 ppm or less of an organic solvent residue.

9. A process according to any preceding claim, in which said epoxidized block copolymer contains 100 ppm less of 0.074 mm of sieve opening-on (200 mesh-on) gels in tetrahydrofuran insolubles.

## Patentansprüche

1. Ein Verfahren zur Herstellung eines epoxidierten Block-Copolymers, umfassend: Herstellen einer Epoxidationsreaktionsflüssigkeit durch Epoxidieren eines Block-Copolymers (C) oder dessen hydrierten Produkts (D) in einer Konzentration von 5 bis 50 Gew.-% in einem organischen Lösungsmittel, wobei das Block-Copolymer einen Polymerblock (A), der vorwiegend aus einer vinylaromatischen Kohlenwasserstoffverbindung zusammengesetzt ist, und einen Polymerblock (B) umfasst, der vorwiegend aus einer konjugierten Dienverbindung zusammengesetzt ist; Konzentrieren der Epoxidationsreaktionsflüssigkeit durch Zuführen derselben zu einem Rührfilmverdampfer, der einen Konzentratablaufauslass aufweist, der die konzentrierte Flüssigkeit schnell ablaufen lassen kann, zur Verdampfung des organischen Lösungsmittels von der Epoxidationsreaktionsflüssigkeit; und anschließend Entfernen des verbleibenden organischen Lösungsmittels von der resultierenden konzentrierten Flüssigkeit durch einen biaxialen Entgasungsextruder, wodurch ein epoxidiertes Block-Copolymer (E) gewonnen wird, das in der Epoxidationsreaktionsflüssigkeit hergestellt worden ist.

2. Verfahren nach Anspruch 1, bei dem das epoxidierte Block-Copolymer (E) ein Epoxyäquivalentgewicht von 140 bis 15000 aufweist.

3. Verfahren nach Anspruch 2, bei dem das epoxidierte Block-Copolymer (E) ein Epoxyäquivalentgewicht von 200 bis 12000 aufweist.

4. Verfahren nach Anspruch 1, 2 oder 3, bei dem der Rührfilmverdampfer bei einer Temperatur von 80 bis 300°C und einem Innendruck von 101,1 kPa (760 mm Hg) oder niedriger betrieben werden kann.

5. Verfahren nach einem der Ansprüche 1 bis 4, bei dem der Rührfilmverdampfer mit einer Verweilzeit von 20 min oder weniger betrieben werden kann.

6. Verfahren nach Anspruch 1, bei dem der biaxiale Entgasungsextruder bei einer Temperatur von 80 bis 300°C und einem Innendruck von 66,5 kPa (500 mm Hg) oder niedriger betrieben werden kann.

7. Verfahren nach einem der vorstehenden Ansprüche, bei dem der biaxiale Entgasungsextruder mit einer Verweilzeit von 15 min oder weniger betrieben werden kann.

8. Verfahren nach einem der vorstehenden Ansprüche, bei dem das epoxidierte Block-Copolymer 1000 ppm oder weniger eines Rückstands eines organischen Lösungsmittels enthält.

9. Verfahren nach einem der vorstehenden Ansprüche, bei dem das epoxidierte Block-Copolymer 100 ppm oder weniger an Gelen enthält, die in Tetrahydrofuran unlöslich sind und auf einer Sieböffnung von 0,074 mm (Maschenzahl (mesh) 200) zurückgehalten werden.

## Revendications

1. Procédé de production d'un copolymère séquencé époxydé qui comprend les étapes consistant à : préparer un liquide de réaction d'époxydation par époxydation d'un copolymère séquencé (C) ou de son produit d'hydrogénation (D) à une concentration de 5 à 50 % en poids dans un solvant organique, ledit copolymère séquencé comprenant une séquence polymérique (A) composée de manière prédominante d'un composé de type hydrocarbure vinylique aromatique et une séquence polymérique (B) composée de manière prédominante d'un composé de type diène conjugué ; concentrer ledit liquide de réaction d'époxydation en l'introduisant dans un évaporateur de type à film sous agitation ayant une sortie d'évacuation de concentré qui évacue par force le liquide concentré de manière à faire évaporer le solvant organique de celui-ci ; et éliminer ensuite le solvant organique résiduel du liquide concentré résultant au moyen d'une extrudeuse à dégazage biaxiale, pour récupérer ainsi un copolymère séquencé époxydé (E) qui a été préparé dans le liquide de réaction d'époxydation.

2. Procédé selon la revendication 1, dans lequel ledit copolymère séquencé époxydé (E) présente un poids équivalent d'époxy de 140 à 15 000.

3. Procédé selon la revendication 2, dans lequel ledit copolymère séquencé époxydé (E) présente un poids équivalent d'époxy de 200 à 12 000.

4. Procédé selon la revendication 1, 2 ou 3, dans lequel on peut faire fonctionner ledit évaporateur de type à film sous agitation à une température de 80 à 300 °C et à une pression interne de 101,1 kPa (760 mm de Hg) ou moins.

5. Procédé selon l'une quelconque des revendications 1 à 4, dans lequel on peut faire fonctionner ledit évaporateur de type à film sous agitation avec un temps de séjour de 20 minutes ou moins.

6. Procédé selon la revendication 1, dans lequel on peut faire fonctionner l'extrudeuse à dégazage biaxiale à une température de 80 à 300 °C et à une pression interne de 66,5 kPa (500 mm de Hg) ou moins.

7. Procédé selon l'une quelconque des revendications précédentes, dans lequel on peut faire fonctionner l'extrudeuse à dégazage biaxiale sous agitation avec un temps de séjour de 15 minutes ou moins.

8. Procédé selon l'une quelconque des revendications précédentes, dans lequel ledit copolymère séquencé époxydé contient 1000 ppm ou moins d'un résidu de solvant organique.

9. Procédé selon l'une quelconque des revendications précédentes, dans lequel ledit copolymère séquencé époxydé contient 100 ppm ou moins de gels insolubles dans le tétrahydrofurane restant sur un tamis présentant une ouverture de maille de 0,074 mm (200 mesh).
